# EUROPEAN PATENT APPLICATION

(11) **EP 4 707 418 A1**
(43) Date of publication of application: **11.03.2026**
(21) Application number: 25805598.7
(22) Date of filing: 14.03.2025
(51) Int. Cl.: C22C 21/04, C22C 1/02, B22D 17/00

(54) **HEAT-TREATMENT-FREE ALUMINUM ALLOY MATERIAL, AND PREPARATION METHOD THEREFOR AND USE THEREOF**

(30) Priority: 12.06.2024 CN 202410755513
(71) Applicant: Chery Automobile Co., Ltd., Wuhu, Anhui 241006 (CN)
(72) Inventor: GAO, Xinhua, Wuhu, Anhui 241006 (CN); XU, Youzhong, Wuhu, Anhui 241006 (CN); LI, Zhangyin, Wuhu, Anhui 241006 (CN); WU, Guigen, Wuhu, Anhui 241006 (CN); XIAO, Yong, Wuhu, Anhui 241006 (CN); CHEN, Peilei, Wuhu, Anhui 241006 (CN); XU, Kaiyang, Wuhu, Anhui 241006 (CN); ZHANG, Lei, Wuhu, Anhui 241006 (CN)
(74) Representative: dompatent
(86) International application number: PCT/CN2025/082590
(87) International publication number: WO 2025/256208

(57) **Abstract**

Disclosed are a heat-treatment-free aluminum alloy material, a method for preparing same, and use thereof, which belong to the technical field of alloys. The heat-treatment-free aluminum alloy material includes element components in the following mass percentages: 7.5% to 8.5% of Si, 0.4% to 0.8% of Mg, 0.6% to 0.7% of Cu, 0.1% to 0.4% of Zn, 0.4% to 0.8% of Mn, 0% to 0.4% of Fe, 0.13% to 0.25% of Ca, 0.015% to 0.050% of Sr, 0.05% to 0.30% of Ti, 0.03% to 0.05% of V, 0.05% to 0.2% of RE, less than 0.03% of inevitable impurities, and balance Al, and the RE element is La and/or Ce. The aluminum alloy material exhibits excellent strength and toughness characteristics while ensuring outstanding fluidity.

## Description

The present disclosure claims priority to Chinese Patent Application No. 202410755513.7, filed on June 12, 2024 and entitled "HEAT-TREATMENT-FREE ALUMINUM ALLOY MATERIAL, METHOD FOR PREPARING SAME, AND USE THEREOF", the disclosure of which is herein incorporated by reference in its entirety.

### TECHNICAL FIELD

The present disclosure relates to the technical field of alloys, and in particular, to a heat-treatment-free aluminum alloy material, a method for preparing same, and use thereof.

### BACKGROUND

Aluminum alloy casting based on aluminum alloy materials has the characteristics of integration, light weight, and high toughness, and is generally used for manufacturing structural members of automobiles, which is advantageous for the lightweight design of automobiles.

Al-Si-series aluminum alloy materials exhibit excellent casting properties and are more suitable for manufacturing structural members of automobiles. In particular, heat-treatment-free Al-Si-series aluminum alloy materials are further conducive to reducing production costs. However, the strength and toughness of the currently known heat-treatment-free Al-Si-series aluminum alloy materials still need to be improved.

### SUMMARY

In view of this, the present disclosure provides a heat-treatment-free aluminum alloy material, a method for preparing same, and use thereof, which may solve the technical problems in some practices.

Specifically, the present disclosure includes the following technical solutions.

In one aspect, a heat-treatment-free aluminum alloy material is provided. The heat-treatment-free aluminum alloy material includes element components in the following mass percentages: 7.5% to 8.5% of Si, 0.4% to 0.8% of Mg, 0.6% to 0.7% of Cu, 0.1% to 0.4% of Zn, 0.4% to 0.8% of Mn, 0% to 0.4% of Fe, 0.13% to 0.25% of Ca, 0.015% to 0.050% of Sr, 0.05% to 0.30% of Ti, 0.03% to 0.05% of V, 0.05% to 0.2% of RE, less than 0.03% of inevitable impurities, and balance Al, wherein an RE element is at least one of La or Ce.

The heat-treatment-free aluminum alloy material according to the embodiments of the present disclosure includes element components in the following mass percentages: 7.5% to 8.5% of Si, 0.4% to 0.8% of Mg, 0.6% to 0.7% of Cu, 0.1% to 0.4% of Zn, 0.4% to 0.8% of Mn, 0% to 0.4% of Fe, 0.15% to 0.25% of Ca, 0.015% to 0.050% of Sr, 0.05% to 0.30% of Ti, 0.03% to 0.05% of V, 0.05% to 0.2% of RE, less than 0.03% of inevitable impurities, and balance Al, and the RE element is at least one of La or Ce. By selecting specific types of elements and combining them in specific mass percentages, the components act synergistically. In one aspect, the liquidus temperature of the aluminum alloy material is lowered, and the fluidity of the aluminum alloy melt is improved, thus ensuring the mold-filling capability of the aluminum alloy material and facilitating molding by integrated die-casting processes. In another aspect, it is beneficial to improve the strength, toughness, deformation resistance, and other properties of the aluminum alloy material.

In some possible embodiments, a mass ratio of a Si element to a Ca element is 40 to 65:1.

In some possible embodiments, a ratio of a mass of a Si element to a total mass of a Ca element, a V element, and the RE element is 20 to 35:1.

In some possible embodiments, a mass percentage of a Ca element ranges from 0.15% to 0.19%.

In another aspect, a method for preparing a heat-treatment-free aluminum alloy material is provided, and the heat-treatment-free aluminum alloy material is the heat-treatment-free aluminum alloy material according to any one of the above aspects.

The method for preparing the heat-treatment-free aluminum alloy material includes: providing raw materials for preparation based on the mass percentages of elements in the heat-treatment-free aluminum alloy material; and
acquiring the heat-treatment-free aluminum alloy material by subjecting the raw materials for preparation to melting treatment, drossing treatment, and die casting treatment in sequence.

In some possible embodiments, at least part of the raw materials for preparation is selected from aluminum scrap materials.

In some possible embodiments, the aluminum scrap materials include at least one of 1-series aluminum alloy scrap, 5-series aluminum alloy scrap, 6-series aluminum alloy scrap, A356 aluminum alloy scrap, A380 aluminum alloy scrap, AlSi7Mg0.3Cu0.5 aluminum alloy scrap, or AlSi9Cu3 aluminum alloy scrap.

In some possible embodiments, in the raw materials for preparation, a Ca element is added in a form of an Al-10Ca alloy; at least part of a Si element is added in a form of an Al-20Si alloy; at least part of a Mg element is added in a form of pure Mg; at least part of a Mn element is added in a form of an Al-20Mn alloy; at least part of a Cu element is added in a form of an Al-50Cu alloy; at least part of a Zn element is added in a form of an Al-20Zn alloy; at least part of a V element is added in a form of an Al-5V alloy; at least part of a Ti element is added in a form of an Al-10Ti alloy; and at least part of a Sr element is added in a form of an Al-10Sr alloy.

In some possible embodiments, providing the raw materials for preparation based on the mass percentages of the elements in the heat-treatment-free aluminum alloy material includes:
acquiring an aluminum scrap raw material as a first part of raw material for preparation by subjecting the aluminum scrap materials to classification, crushing, and impurity removal in sequence;
determining and providing, upon determining the first part of raw material for preparation, a second part of raw material for preparation based on a formula of the heat-treatment-free aluminum alloy material; and
acquiring the raw materials for preparation by proportioning the first part of raw material for preparation and the second part of raw material for preparation based on the mass percentages of the elements in the heat-treatment-free aluminum alloy material.

In some possible embodiments, acquiring the heat-treatment-free aluminum alloy material by subjecting the raw materials for preparation to the melting treatment, the drossing treatment, and the die casting treatment in sequence includes:
acquiring a first raw material melt by subjecting the first part of raw material for preparation to the melting treatment and dross removal treatment in sequence;
acquiring an aluminum alloy melt by adding components contained in the second part of raw material for preparation into the first raw material melt in a stepwise addition manner and performing the melting treatment; and
acquiring the heat-treatment-free aluminum alloy material by subjecting the aluminum alloy melt to the die casting treatment.

In still another aspect, the embodiments of the present disclosure further provide use of a heat-treatment-free aluminum alloy material in preparing an aluminum alloy structural member. The heat-treatment-free aluminum alloy material is the heat-treatment-free aluminum alloy material according to any one of the above aspects, or is prepared by the method for preparing the heat-treatment-free aluminum alloy material according to any one of the above aspects.

In yet still another aspect, the embodiments of the present disclosure further provide an aluminum alloy structural member. The aluminum alloy structural member is prepared by using a heat-treatment-free aluminum alloy material, and the heat-treatment-free aluminum alloy material is the heat-treatment-free aluminum alloy material according to any one of the above aspects, or is prepared by the method for preparing the heat-treatment-free aluminum alloy material according to any one of the above aspects.

### BRIEF DESCRIPTION OF DRAWINGS

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a microstructure image of aluminum alloy die-casting corresponding to Example 3;
FIG. 2 is a scanning electron microscope of aluminum alloy die-casting corresponding to Example 3 under a resolution condition; and
FIG. 3 is a scanning electron microscope of aluminum alloy die-casting corresponding to Example 3 under another resolution condition.

The above accompanying drawings have shown the explicit embodiments of the present disclosure, which will be described in detail hereinafter. These accompanying drawings and text descriptions are not intended to limit the scope of the conception of the present disclosure in any way, but to illustrate the concept of the present disclosure to those skilled in the art with reference to specific embodiments.

### DETAILED DESCRIPTION

The technical solutions according to the embodiments of the present disclosure will be clearly and completely described hereinafter with reference to the accompanying drawings in the embodiments of the present disclosure, and it is apparent that the described embodiments are only part, but not all of the embodiments of the present disclosure. Based on the embodiments in the present disclosure, all other embodiments derived by those of ordinary skill in the art without creative efforts shall fall within the protection scope of the present disclosure.

In recent years, under the requirements of the dual-carbon target, people have become increasingly aware of the importance of energy saving and emission reduction for the sustainable development of humankind. In the automobile industry, analysis data shows that every 10% reduction in automobile weight may reduce fuel consumption by 6% to 8% and reduce emissions by 4% for the automobile. For new energy automobiles, a weight reduction of 100 kg may increase the driving range by 10% to 11%, and reduce battery cost by 20% and daily loss cost by 20%. Therefore, lightweighting for automobiles has gradually become an urgent demand in the development of the automobile industry.

Aluminum alloy materials have been increasingly used in automobiles due to their light weight. In particular, aluminum die-casting is increasingly used in automobiles due to their advantages such as integration, light weight, and high toughness. Therefore, the integration degree of the die-casting is required to be continuously improved. The conventional AlSi10MnMg alloy requires heat treatment, and thus is difficult to meet the demand, such that a new type of heat-treatment-free die casting aluminum alloy material is required. Meanwhile, the demand for integrated die casting technologies in the automobile industry is growing.

Al-Si-series aluminum alloy materials exhibit excellent casting properties and are more suitable for manufacturing structural members of automobiles. In particular, heat-treatment-free Al-Si-series aluminum alloy materials are further conducive to reducing production costs. However, the strength and toughness of the currently known heat-treatment-free Al-Si-series aluminum alloy materials still need to be improved, and thus it is difficult for the currently known heat-treatment-free Al-Si-series aluminum alloy materials to satisfy the requirements for integrated die-cast automotive structures.

In one aspect, the embodiments of the present disclosure provide a heat-treatment-free aluminum alloy material. The heat-treatment-free aluminum alloy material includes element components in the following mass percentages: 7.5% to 8.5% of Si, 0.4% to 0.8% of Mg, 0.6% to 0.7% of Cu, 0.1% to 0.4% of Zn, 0.4% to 0.8% of Mn, 0% to 0.4% of Fe, 0.15% to 0.25% of Ca, 0.015% to 0.050% of Sr, 0.05% to 0.30% of Ti, 0.03% to 0.05% of V, 0.05% to 0.2% of RE, less than 0.03% of inevitable impurities, and balance Al. The RE element is La and/or Ce.

For the heat-treatment-free aluminum alloy material, the functions of the respective element components therein are described first.

In the embodiments of the present disclosure, the mass percentage of the Si element ranges from 7.5% to 8.5%, which includes, but is not limited to, the following point values and an interval range formed by any two of the point values: 7.5%, 7.6%, 7.7%, 7.8%, 7.9%, 8%, 8.1%, 8.2%, 8.3%, 8.4%, 8.5%, and the like.

The Si element may both increase the strength of the aluminum alloy material and ensure the casting fluidity of the aluminum alloy material. Based on the mass percentage of the Si element, the aluminum alloy in the embodiments of the present disclosure is an aluminum alloy with a medium silicon content, and is generally applicable for manufacturing structural members requiring higher strength but relatively moderate elongation, for example, structural members applied to front and rear sections of a three-segment integrated die-cast structural member.

The mass percentage of the Mg element ranges from 0.4% to 0.8%, which includes, but is not limited to, the following point values and an interval range formed by any two of the point values: 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6%, 0.61%, 0.62%, 0.63%, 0.64%, 0.65%, 0.66%, 0.67%, 0.68%, 0.69%, 0.7%, 0.71%, 0.72%, 0.73%, 0.74%, 0.75%, 0.76%, 0.77%, 0.78%, 0.79%, 0.8%, and the like.

Under die casting conditions, part of the Mg element is solutionized in the aluminum alloy matrix to increase the strength of the matrix, and another part of the Mg element precipitate a secondary phase (such as Mg₂Si) in the eutectic region to enhance the strength of the aluminum alloy.

The mass percentage of the Cu element ranges from 0.6% to 0.7%, which includes, but is not limited to, the following point values and an interval range formed by any two of the point values: 0.6%, 0.61%, 0.62%, 0.63%, 0.64%, 0.65%, 0.66%, 0.67%, 0.68%, 0.69%, 0.7%, and the like.

Under die casting conditions, part of the Cu element is solutionized in the matrix to increase the strength of the matrix, and another part of the Cu element precipitates a strengthening phase (such as Al₂Cu) in the eutectic region to enhance the strength of the aluminum alloy. The Cu element having the mass percentage may also improve the casting fluidity of the aluminum alloy material, compensating for the reduced fluidity caused by a lower silicon content.

The mass percentage of the Zn element ranges from 0.1% to 0.4%, which includes, but is not limited to, the following point values and an interval range formed by any two of the point values: 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, and the like.

The Zn element is enriched on the surfaces of the Al-Si-Cu-Mg phase and the Fe-containing phase during the solidification process, and the growth of the Al-Si-Cu-Mg phase and the Fe-containing phase is inhibited, such that the dimensions of the Al-Si-Cu-Mg phase and the Fe-containing phase are reduced, thus significantly improving the as-cast properties of the aluminum alloy material. Furthermore, due to the increased solid solubility of the Zn element in the α-Al phase during the aging process, the Zn element is solutionized in the α-Al phase, such that a solid-solution strengthening effect is provided, which is conducive to enhancing the strength of the aluminum alloy material. The mass percentage of the Zn element within the range and the synergistic effect with other component elements are more advantageous for optimizing the as-cast properties and strength of the aluminum alloy material.

The mass percentage of the Mn element ranges from 0.4% to 0.8%, which includes, but is not limited to, the following point values and an interval range formed by any two of the point values: 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6%, 0.61%, 0.62%, 0.63%, 0.64%, 0.65%, 0.66%, 0.67%, 0.68%, 0.69%, 0.7%, 0.71%, 0.72%, 0.73%, 0.74%, 0.75%, 0.76%, 0.77%, 0.78%, 0.79%, 0.8%, and the like.

The Mn element having the mass percentage may control the needle-shaped Fe phase, reduce the detrimental effect of the Fe phase, and further facilitate improving the demolding properties of the aluminum alloy material.

The mass percentage of the Fe element ranges from 0% to 0.4%, which includes, but is not limited to, the following point values and an interval range formed by any two of the point values: 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, and the like.

During the solidification process, the Fe element tends to form a needle-shaped or plate-shaped β-Fe phase together with Al, Si, and other elements, which easily causes stress concentration under mechanical loading, thus fracturing the matrix and deteriorating the properties of the aluminum alloy material. Therefore, in the embodiments of the present disclosure, the mass percentage of the Fe element is less than or equal to 0.4% to avoid deterioration of the properties of the alloy material.

The mass percentage of the Ca element ranges from 0.13% to 0.25%, which includes, but is not limited to, the following point values and an interval range formed by any two of the point values: 0.13%, 0.14%, 0.15%, 0.16%, 0.17%, 0.18%, 0.19%, 0.2%, 0.21%, 0.22%, 0.23%, 0.24%, 0.25%, and the like.

In the embodiments of the present disclosure, since 0.13% to 0.25% of the Ca element is added to the aluminum alloy material, the Ca element acts as a heterogeneous nucleation particle to facilitates increasing the nucleation of primary Al grains. Moreover, the Ca element having the mass percentage may readily form secondary phases with other elements while and refine the grains, and thus the strength and toughness of the aluminum alloy material are ultimately improved.

Further, the mass percentage of the Ca element ranges from 0.15% to 0.19%, such that the strength and toughness of the aluminum alloy material are further optimized.

The mass percentage of the Sr element ranges from 0.015% to 0.050%, which includes, but is not limited to, the following point values and an interval range formed by any two of the point values: 0.015%, 0.016%, 0.017%, 0.018%, 0.019%, 0.02%, 0.021%, 0.022%, 0.023%, 0.024%, 0.025%, 0.026%, 0.027%, 0.028%, 0.029%, 0.03%, 0.031%, 0.032%, 0.033%, 0.034%, 0.035%, 0.036%, 0.037%, 0.038%, 0.039%, 0.04%, 0.041%, 0.042%, 0.043%, 0.044%, 0.045%, 0.046%, 0.047%, 0.048%, 0.049%, 0.05%, and the like.

The Sr element having the mass percentage may modify the eutectic Si from a lamellar structure into a fine granular structure, such that the toughness of the aluminum alloy material is improved.

The mass percentage of the Ti element ranges from 0.05% to 0.30%, which includes, but is not limited to, the following point values and an interval range formed by any two of the point values: 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, and the like.

In the embodiments of the present disclosure, since 0.05% to 0.30% of the Ti element is added to the aluminum alloy material, the Ti element acts as a heterogeneous nucleation particle, such that the nucleation of primary (Al) grains is increased, achieving grain refinement and the purpose of improving the strength and toughness of the aluminum alloy material.

RE represents a rare earth element selected from at least one of La or Ce, and the mass percentage of the RE element ranges from 0.05% to 0.2%, which includes, but is not limited to, the following point values and an interval range formed by any two of the point values: 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, and the like.

In the embodiments of the present disclosure, since 0.05% to 0.20% of the RE element is added to the aluminum alloy material, the RE element acts as a heterogeneous nucleation particle, such that the nucleation of primary (Al) grains is increased, achieving grain refinement and the purpose of improving the strength and toughness of the aluminum alloy material.

The mass percentage of the V element ranges from 0.03% to 0.05%, which includes, but is not limited to, the following point values and an interval range formed by any two of the point values: 0.03%, 0.031%, 0.032%, 0.033%, 0.034%, 0.035%, 0.036%, 0.037%, 0.038%, 0.039%, 0.04%, 0.041%, 0.042%, 0.043%, 0.044%, 0.045%, 0.046%, 0.047%, 0.048%, 0.049%, 0.05%, and the like.

The V element having the mass percentage may refine the eutectic silicon and form fine dispersed phases, and may also modify the morphology of iron phases, thus achieving the purpose of improving the strength and toughness of the aluminum alloy material.

In summary, according to the heat-treatment-free aluminum alloy material in the embodiments of the present disclosure, by selecting specific types of elements and combining them in specific mass percentages, the components act synergistically. In one aspect, the liquidus temperature of the aluminum alloy material is lowered, and the fluidity of the aluminum alloy melt is improved, thus ensuring the mold-filling capability of the aluminum alloy material and facilitating molding by integrated die-casting processes. In another aspect, it is beneficial to improve the strength, toughness, deformation resistance, and other properties of the aluminum alloy material.

The mechanisms for the improvement of the strength, toughness, deformation resistance, and other properties of the aluminum alloy material in the embodiments of the present disclosure may be described as follows.

During the solidification process of the aluminum alloy melt, elements such as Ca and Mg may form secondary phases including AlCaSi, Al₄Ca, Mg₂Si, and Al-Si-Cu-Mg phases at grain boundaries, and simultaneously refine the grains. The addition of the V element and the rare earth element RE increases the number of crystallization nuclei during the crystallization process of the aluminum alloy melt, resulting in a finer microstructure, and also leads to the formation of finer granular secondary phases (such as Al₂CaSi₂). The interactions between these strengthening phases and dislocations imped dislocation motion, such that the deformation resistance and mechanical strength of the alloy are significantly improved. Furthermore, more of Cu, Mg, and Si elements existing in the aluminum alloy matrix are retained in the aluminum alloy matrix during the rapid cooling process, and these strengthening elements form strengthening phases in the aluminum alloy matrix during the subsequent aging heat treatment process, such that the strength of the aluminum alloy matrix is enhanced, and an aluminum alloy material with excellent comprehensive performances is acquired without additional solution heat treatment. Moreover, the specific contents of V element and rare earth element RE in the aluminum alloy material may form a near-spherical AlFeSiMnV phase together with Al, Fe, Si, Mn, and other elements, such that the adverse effects caused by the detrimental Fe phases in the aluminum alloy matrix is effectively reduced. The near-spherical AlFeSiMnV phase further acts as a strengthening phase to impede dislocation motion, such that the strength and toughness of the aluminum alloy are improved without heat treatment.

For the heat-treatment-free aluminum alloy material, studies have found that the mass ratio of Si, Ca and other elements affects the morphology and dimension of the AlCaSi phase, which directly affects the comprehensive performances of the aluminum alloy material.

In the embodiments of the present disclosure, the mass ratio of the Si element to the Ca element is 40 to 65:1, which includes but is not limited to: 40:1, 41:1, 42:1, 43:1, 44:1, 45:1, 46:1, 47:1, 48:1, 49:1, 50:1, 51:1, 52:1, 53:1, 54:1, 55:1, 56:1, 57:1, 58:1, 59:1, 60:1, 61:1, 62:1, 63:1, 64:1, 65:1, and the like. This not only facilitates improving the tensile strength, yield strength, and elongation at break of the aluminum alloy material, but also facilitates improving the fluidity of the aluminum alloy melt.

In some examples, in the embodiments of the present disclosure, the ratio of the mass of the Si element to the total mass of the Ca element, the V element, and the RE element is 20 to 35:1, which includes but is not limited to: 20:1, 21:1, 22:1, 23:1, 24:1, 25:1, 26:1, 27:1, 28:1, 29:1, 30:1, 31:1, 32:1, 33:1, 34:1, 35:1, and the like. Therefore, this not only facilitates improving the tensile strength, yield strength, and elongation at break of the aluminum alloy material, but also facilitates improving the fluidity of the aluminum alloy melt.

In summary, the aluminum alloy according to the embodiments of the present disclosure has both excellent strength and toughness, and is applicable to large integrated high-vacuum die-casting for automobiles. In addition, the aluminum alloy may be produced by using recycled aluminum of automobiles, such that a closed-loop manufacturing process for automotive products is achieved, and the goal of low-carbon sustainable recycling production is satisfied.

In another aspect, the embodiments of the present disclosure further provide a method for preparing a heat-treatment-free aluminum alloy material. The heat-treatment-free aluminum alloy material is the heat-treatment-free aluminum alloy material according to any one of the aspects.

The method for preparing the heat-treatment-free aluminum alloy material includes the following processes.

In S1, raw materials for preparation are provided based on the mass percentages of the elements in the heat-treatment-free aluminum alloy material.

In S2, the heat-treatment-free aluminum alloy material is acquired by subjecting the raw materials for preparation to melting treatment, drossing treatment, and die casting treatment in sequence.

Since the aluminum alloy material in the embodiments of the present disclosure is used, an aluminum alloy material with excellent strength, toughness, deformation resistance, and other properties is prepared without heat treatment during the preparation process.

In some examples, at least part of the raw materials for preparation is selected from aluminum scrap materials. For example, the aluminum scrap materials are aluminum scrap materials recycled from automobiles.

By utilizing aluminum scrap materials to provide raw materials for preparation, carbon emissions are greatly reduced, and low-carbon and low-cost production is achieved, which is conducive to low-carbon sustainable development of the industry.

In some embodiments, the aluminum scrap materials include at least one of 1-series aluminum alloy scrap, 5-series aluminum alloy scrap, 6-series aluminum alloy scrap, A356 aluminum alloy scrap, A380 aluminum alloy scrap, AlSi7Mg0.3Cu0.5 aluminum alloy scrap, or AlSi9Cu3 aluminum alloy scrap. The AlSi7Mg0.3Cu0.5 aluminum alloy scrap means that the mass percentages of Si element, Mg element, and Cu element in the scrap are 7%, 0.3%, and 0.5%, respectively. For example, the 1-series aluminum alloy scrap generally includes aluminum wires, the 5-series aluminum alloy scrap and the 6-series aluminum alloy scrap generally include automobile body panels, the A356 aluminum alloy scrap generally includes automobile wheels and hubs, the A380 aluminum alloy scrap and the AlSi9Cu3 aluminum alloy scrap generally include automobile suspension supports, and the AlSi7Mg0.3Cu0.5 aluminum alloy scrap generally includes automobile cylinder heads.

Automobiles contain abundant aluminum alloy materials that may be recycled to acquire secondary aluminum. Compared with the production of primary aluminum, the production process of secondary aluminum requires only 5% of the energy consumed for primary aluminum, the greenhouse gas emission reaches 95%, and the cost is also significantly reduced.

In the case where at least part of the raw materials for preparation is selected from aluminum scrap materials, to ensure that each element in the aluminum alloy material is sufficiently provided and is smoothly released into the aluminum alloy matrix through melting, the following elements in the raw materials for preparation are provided in specific forms, respectively. The Ca element is added in the form of an Al-10Ca alloy (in which the mass percentage of Ca element is 10%); at least part of the Si element is added in the form of an Al-20Si alloy (in which the mass percentage of Si element is 20%); at least part of the Mg element is added in the form of pure Mg; at least part of the Mn element is added in the form of an Al-20Mn alloy (in which the mass percentage of Mn element is 20%); at least part of the Cu element is added in the form of an Al-50Cu alloy (in which the mass percentage of Cu element is 50%); at least part of the Zn element is added in the form of an Al-20Zn alloy (in which the mass percentage of the Zn element is 20%); at least part of the V element is added in the form of an Al-5V alloy (in which the mass percentage of the V element is 5%); at least part of the Ti element is added in the form of an Al-10Ti alloy (in which the mass percentage of the Ti element is 10%); and at least part of the Sr element is added in the form of an Al-10Sr alloy (in which the mass percentage of the Sr element is 10%).

In some embodiments, the rare earth element RE is provided in the form of a mixture of elemental La and elemental Ce.

In some embodiments, in S1, providing the raw materials for preparation based on the mass percentages of the elements in the heat-treatment-free aluminum alloy material includes:

In S11, an aluminum scrap raw material is acquired by subjecting the aluminum scrap materials to classification, crushing, and impurity removal in sequence and is determined as a first part of raw material for preparation.

In S12, upon determination of the first part of raw material for preparation, a second part of raw material for preparation is determined and provided based on the formula of the heat-treatment-free aluminum alloy material.

In S13, the raw materials for preparation is acquired by proportioning the first part of raw material for preparation and the second part of raw material for preparation based on the mass percentages of the elements in the heat-treatment-free aluminum alloy material. Therefore, it is ensured that a heat-treatment-free aluminum alloy material having a desired composition is acquired upon the melting of the raw materials for preparation.

Further, in S2, acquiring the heat-treatment-free aluminum alloy material by subjecting the raw materials for preparation to melting treatment, dross removal treatment, and die casting treatment in sequence includes: acquiring a first raw material melt by subjecting the first part of raw material for preparation to melting treatment and drossing treatment in sequence; acquiring an aluminum alloy melt by adding components contained in the second part of raw material for preparation into the first raw material melt in a stepwise addition manner and performing melting treatment; and acquiring the heat-treatment-free aluminum alloy material by subjecting the aluminum alloy melt to die casting treatment.

For example, at least one of a waste aluminum hub, a waste suspension support, a waste aluminum plate, or a waste aluminum wire was used as the first part of raw material for preparation, and the first part of raw material for preparation was proportioned based on the formula of the heat-treatment-free aluminum alloy material. The first part of raw material for preparation after proportioning was placed in a melting furnace for melting, and the melting temperature was set to 720 °C to 740 °C. After all the raw materials for preparation were melted, surface dross was removed, and then stirring was performed for 15 minutes to 20 minutes to acquire the first raw material melt.

The first raw material melt was transferred to a holding furnace at a temperature of 740 °C to 750 °C, then the components contained in the second part of raw material for preparation were added to the first raw material melt in a stepwise addition manner, and melting treatment was performed. For example, the procedure includes the following processes. Upon proportion of the second part of raw material for preparation, Al-20Si, Al-20Mn, and Al-50Cu intermediate alloys in a specific ratio were added to the first raw material melt and stirred for 5 minutes to 8 minutes upon complete melting of these intermediate alloys, followed by holding for 15 minutes to 20 minutes. Subsequently, the temperature was further raised to 750 °C to 760 °C, and Al-10Ca, Al-5V, and Al-10Ti intermediate alloys were added and stirred for 5 minutes to 8 minutes upon complete melting of the intermediate alloys, followed by holding for 15 minutes to 20 minutes. Then, a sodium-free refining agent was further added for refining for 10 minutes to 15 minutes, and the temperature of the alloy melt was reduced to 740 °C to 750 °C. Subsequently, a preheated Al-10Sr intermediate alloy and the rare earth element RE were added, and stirring was performed for 5 minutes to 8 minutes. High-purity nitrogen was introduced for complete degassing, with a degassing time greater than or equal to 20 minutes, so as to acquire a purified aluminum alloy melt. The aluminum alloy melt was subjected to drossing and then allowed to stand for 20 minutes to 25 minutes for later use.

In some embodiments, acquiring the heat-treatment-free aluminum alloy material by subjecting the aluminum alloy melt to die casting treatment includes: cooling the aluminum alloy melt to 700 °C to 710 °C, and then performing die casting treatment.

In summary, the prepared heat-treatment-free aluminum alloy material prepared by the process for preparing the heat-treatment-free aluminum alloy material according to the embodiments of the present disclosure may achieve high strength and high toughness without heat treatment, which may satisfy the requirements for the die casting of large automobile structural members while reducing production costs, and may replace conventional die-cast aluminum alloy materials that require heat treatment in the automobile industry. Furthermore, through the use of aluminum scrap materials, the carbon reduction goal and cost reduction may also be achieved.

In still another aspect, the embodiments of the present disclosure further provide use of a heat-treatment-free aluminum alloy material in preparing an aluminum alloy structural member. The heat-treatment-free aluminum alloy material is the heat-treatment-free aluminum alloy material according to any one of the aspects, or is prepared by any one of the methods for preparing a heat-treatment-free aluminum alloy material.

In still another aspect, the embodiments of the present disclosure further provide an aluminum alloy structural member. The aluminum alloy structural member is prepared by using a heat-treatment-free aluminum alloy material, and the heat-treatment-free aluminum alloy material is the heat-treatment-free aluminum alloy material according to any one of the aspects, or is prepared by any one of the methods for preparing a heat-treatment-free aluminum alloy material.

Exemplary embodiments of the present disclosure will be described in more detail below. Although exemplary embodiments of the present disclosure are described below, it should be understood that the present disclosure may be implemented in various forms and should not be limited to the embodiments set forth herein. Procedures without specific techniques or conditions indicated in the examples were carried out according to the techniques or conditions described in the literature in the art or according to product instructions. All used reagents and instruments for which the manufacturer is not specified are commercially available conventional products.

The embodiments of the present disclosure provide specific Examples 1 to 6 and Comparative Example 1 to Example 8, and their formulas are shown in Table 1 below. Table 1 shows other elements except the Al element and their mass percentages, while Table 1 does not show the Al element and its mass percentage. The amounts of the Al element and the inevitable impurities constitute the balance in the embodiments. The RE element is a mixture of elemental La and elemental Ce, in which the mass percentage of the elemental La is 35%, and the mass percentage of the elemental Ce is 65%.

**Table 1**

| No. | Si | Fe | Cu | Mn | Mg | Ti | Zn | Sr | V | Ca | RE |
|---|---|---|---|---|---|---|---|---|---|---|---|
| Example 1 | 7.5 | 0.29 | 0.6 | 0.42 | 0.40 | 0.15 | 0.149 | 0.031 | 0.04 | 0.15 | 0.15 |
| Example 2 | 7.75 | 0.35 | 0.65 | 0.80 | 0.55 | 0.05 | 0.400 | 0.050 | 0.03 | 0.18 | 0.05 |
| Example 3 | 8.05 | 0.28 | 0.62 | 0.60 | 0.60 | 0.20 | 0.195 | 0.032 | 0.042 | 0.19 | 0.16 |
| Example 4 | 8.25 | 0.30 | 0.64 | 0.68 | 0.80 | 0.13 | 0.100 | 0.040 | 0.05 | 0.17 | 0.2 |
| Example 5 | 8.3 | 0.40 | 0.60 | 0.50 | 0.75 | 0.18 | 0.301 | 0.015 | 0.041 | 0.18 | 0.15 |
| Example 6 | 8.5 | 0.29 | 0.70 | 0.40 | 0.60 | 0.14 | 0.159 | 0.018 | 0.039 | 0.135 | 0.13 |
| Example 7 | 8.05 | 0.28 | 0..62 | 0.60 | 0.60 | 0.20 | 0.195 | 0.032 | 0.05 | 0.19 | 0.2 |
| Example 8 | 8.05 | 0.28 | 0..62 | 0.60 | 0.60 | 0.20 | 0.195 | 0.032 | 0.03 | 0.13 | 0.05 |
| Comparati ve Example 1 | 8.05 | 0.28 | 0..62 | 0.60 | 0.60 | 0.20 | 0.195 | 0.032 | 0.042 | / | / |
| Comparati ve Example 2 | 8.05 | 0.28 | 0..62 | 0.60 | 0.60 | 0.20 | 0.195 | 0.032 | 0.042 | / | 0.16 |
| Comparati ve Example 3 | 8.05 | 0.28 | 0..62 | 0.60 | 0.60 | 0.20 | 0.195 | 0.032 | 0.042 | 0.19 | / |
| Comparati ve Example 4 | 8.05 | 0.28 | 0..62 | 0.60 | 0.60 | 0.20 | 0.195 | 0.032 | 0.042 | 0.12 | 0.13 |
| Comparati ve Example 5 | 8.05 | 0.28 | 0..62 | 0.60 | 0.60 | 0.20 | 0.195 | 0.032 | 0.042 | 0.3 | 0.08 |

For the die-cast aluminum alloy structural members prepared from the aluminum alloy materials shown in the examples and the comparative examples shown in Table 1, in the embodiments of the present disclosure, a tensile mechanical property test and a bending angle test were further performed on each of the die-cast aluminum alloy structural members, and the fluidity of the aluminum alloy melt corresponding to each of the aluminum alloy materials prior to die casting was tested. The test results are shown in Table 2.

The bending angle test may be performed with reference to the standard described in VDA238-100, and the bending angle has a correlation with the toughness of the aluminum alloy material. Generally, the larger the bending angle, the better the toughness.

For the fluidity test, upon acquisition of the aluminum alloy melt corresponding to the aluminum alloy material and prior to die casting processing, the temperature of the aluminum alloy melt was reduced to 705 °C, and then the aluminum alloy melt whose temperature was reduced was poured into a horizontally placed mold to allow the aluminum alloy melt to flow freely. Upon cooling and solidification of the aluminum alloy melt, the length of the acquired flowing sample was measured.

**Table 2**

| No. | Tensile strength/MPa | Yield strength/ MPa | Elongation after fracture/% | Fluidity/ mm | Bending angle/° |
|---|---|---|---|---|---|
| Example 1 | 335 | 166 | 13.5 | 1143 | 36.6 |
| Example 2 | 342 | 164 | 13.0 | 1143 | 36.1 |
| Example 3 | 359 | 176 | 14.5 | 1150 | 37.2 |
| Example 4 | 352 | 171 | 13.5 | 1145 | 36.6 |
| Example 5 | 353 | 173 | 14.0 | 1147 | 36.0 |
| Example 6 | 349 | 170 | 14.5 | 1145 | 36.1 |
| Example 7 | 332 | 162 | 12.0 | 1146 | 35.4 |
| Example 8 | 333 | 163 | 12.5 | 1146 | 35.5 |
| Comparative Example 1 | 264 | 131 | 10.0 | 1138 | 31.0 |
| Comparative Example 2 | 282 | 144 | 11.5 | 1140 | 32.4 |
| Comparative Example 3 | 280 | 145 | 11.5 | 1140 | 32.3 |
| Comparative Example 4 | 325 | 158 | 12.0 | 1141 | 34.9 |
| Comparative Example 5 | 320 | 156 | 12.0 | 1141 | 35.1 |

As may be seen from Table 1 and Table 2, no Ca element and RE element were added in Comparative Example 1, no Ca element was added in Comparative Example 2, and no RE element was added in Comparative Example 3. Compared with Examples 1 to 6, in a case where at least one of the Ca element and the RE element was not added to the aluminum alloy material, the strength, the toughness, and the fluidity of the aluminum alloy material were deteriorated.

In Comparative Example 4, the mass percentage of Ca element was 0.12%, which was not within the desired range of 0.13% to 0.19%, and the mass ratio of Si to Ca was 67:1, which was not within the range of 40 to 65:1. Compared with Example 3, the strength, the toughness, and the fluidity of the aluminum alloy material were further deteriorated.

In Comparative Example 5, the mass percentage of Ca element was 0.3%, which was not within the desired range of 0.13% to 0.19%, and the mass ratio of Si to Ca was 27:1, which was not within the range of 40 to 65:1. Compared with Example 3, the strength, the toughness, and the fluidity of the aluminum alloy material were further deteriorated.

In Examples 7 and 8, although the mass ratio of Si to Ca fell within the range of 40 to 65:1, the mass ratio of Si to (Ca+V+RE) did not satisfy 20 to 35:1. Compared with Example 3, the strength, the toughness, and the fluidity of the aluminum alloy material also tended to deteriorate.

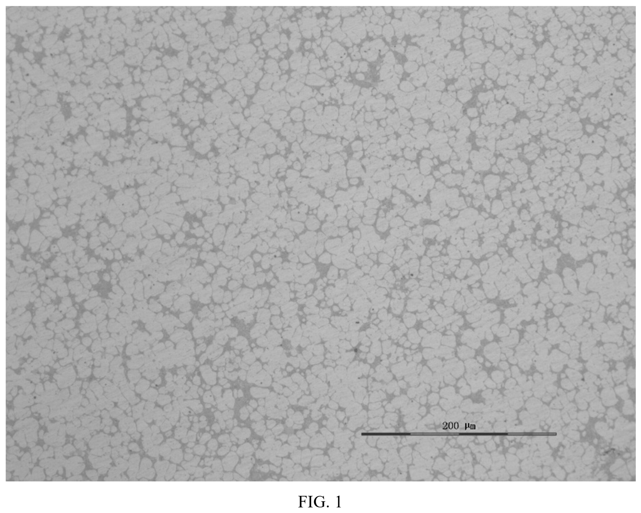

In addition, during the test process, it was observed that the aluminum alloy materials provided in Examples 1 to 8 exhibited no die sticking during the die casting process and showed good fluidity test results. Furthermore, in the embodiments of the present disclosure, microstructure analysis and fracture scanning electron microscope analysis were further performed on the aluminum alloy die-casting corresponding to Example 3. The test results were respectively shown in FIGS. 1 to 3.

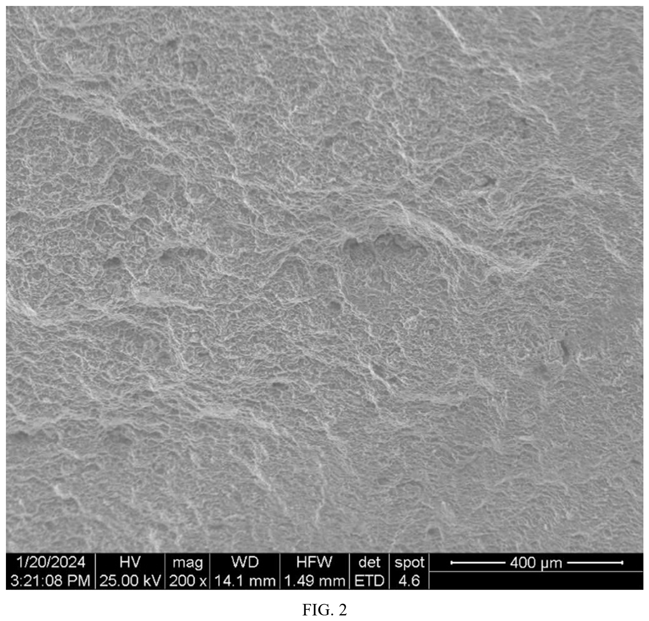

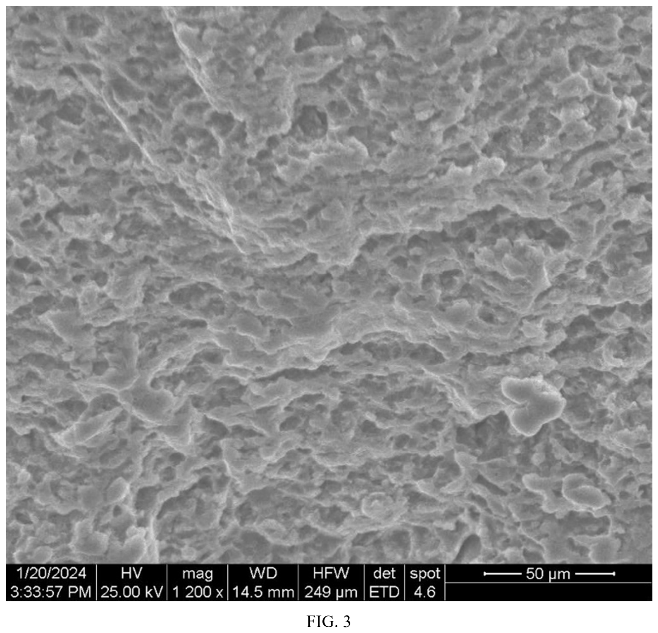

As may be seen from the data in Table 2, the aluminum alloy die-casting corresponding to Example 3 exhibited high yield strength and high elongation (i.e., excellent toughness). As may be seen from FIG. 1, the matrix microstructure of the aluminum alloy die-casting corresponding to Example 3 was fine and uniform, indicating good modification effects. As may be seen from FIGS. 2 and 3, the fracture surface microstructure of the aluminum alloy die-casting corresponding to Example 3 exhibited dense and uniformly sized dimples, indicating good toughness.

It may be seen that the aluminum alloy material according to the embodiments of the present disclosure exhibits excellent strength and toughness while ensuring outstanding fluidity, achieving unexpected effects.

In the embodiments of the present disclosure, the term "and/or" is merely a way to describe the association relationship between associated objects, indicating that there are three possible relationships. For example, "A and/or B" may represent (A), (A and B), and (B).

The description is only intended to facilitate the understanding of the technical solutions of the present disclosure by those skilled in the art, and is not intended to limit the present disclosure. Any modifications, equivalent substitutions, improvements, and the like made within the spirit and principle of the present disclosure should fall within the protection scope of the present disclosure.

## Claims

1. A heat-treatment-free aluminum alloy material, comprising: element components in following mass percentages: 7.5% to 8.5% of Si, 0.4% to 0.8% of Mg, 0.6% to 0.7% of Cu, 0.1% to 0.4% of Zn, 0.4% to 0.8% of Mn, 0% to 0.4% of Fe, 0.13% to 0.25% of Ca, 0.015% to 0.050% of Sr, 0.05% to 0.30% of Ti, 0.03% to 0.05% of V, 0.05% to 0.2% of RE, less than 0.03% of inevitable impurities, and balance Al, wherein an RE element is at least one of La or Ce.

2. The heat-treatment-free aluminum alloy material according to claim 1, wherein a mass ratio of a Si element to a Ca element is 40 to 65:1.

3. The heat-treatment-free aluminum alloy material according to claim 1, wherein a ratio of a mass of a Si element to a total mass of a Ca element, a V element, and the RE element is 20 to 35:1.

4. The heat-treatment-free aluminum alloy material according to any one of claims 1 to 3, wherein a mass percentage of a Ca element ranges from 0.15% to 0.19%.

5. A method for preparing a heat-treatment-free aluminum alloy material, wherein the heat-treatment-free aluminum alloy material is as defined in any one of claims 1 to 4; and
the method for preparing the heat-treatment-free aluminum alloy material comprises:
providing raw materials for preparation based on the mass percentages of elements in the heat-treatment-free aluminum alloy material; and
acquiring the heat-treatment-free aluminum alloy material by subjecting the raw materials for preparation to melting treatment, drossing treatment, and die casting treatment in sequence.

6. The method for preparing the heat-treatment-free aluminum alloy material according to claim 5, wherein at least part of the raw materials for preparation is selected from aluminum scrap materials.

7. The method for preparing the heat-treatment-free aluminum alloy material according to claim 6, wherein the aluminum scrap materials comprise at least one of 1-series aluminum alloy scrap, 5-series aluminum alloy scrap, 6-series aluminum alloy scrap, A356 aluminum alloy scrap, A380 aluminum alloy scrap, AlSi7Mg0.3Cu0.5 aluminum alloy scrap, or AlSi9Cu3 aluminum alloy scrap.

8. The method for preparing the heat-treatment-free aluminum alloy material according to claim 6, wherein in the raw materials for preparation, a Ca element is added in a form of an Al-10Ca alloy; at least part of a Si element is added in a form of an Al-20Si alloy; at least part of a Mg element is added in a form of pure Mg; at least part of a Mn element is added in a form of an Al-20Mn alloy; at least part of a Cu element is added in a form of an Al-50Cu alloy; at least part of a Zn element is added in a form of an Al-20Zn alloy; at least part of a V element is added in a form of an Al-5V alloy; at least part of a Ti element is added in a form of an Al-10Ti alloy; and at least part of a Sr element is added in a form of an Al-10Sr alloy.

9. The method for preparing the heat-treatment-free aluminum alloy material according to claim 6, wherein providing the raw materials for preparation based on the mass percentages of the elements in the heat-treatment-free aluminum alloy material comprises:
acquiring an aluminum scrap raw material as a first part of raw material for preparation by subjecting the aluminum scrap materials to classification, crushing, and impurity removal in sequence;
determining and providing, upon determining the first part of raw material for preparation, a second part of raw material for preparation based on a formula of the heat-treatment-free aluminum alloy material; and
acquiring the raw materials for preparation by proportioning the first part of raw material for preparation and the second part of raw material for preparation based on the mass percentages of the elements in the heat-treatment-free aluminum alloy material.

10. The method for preparing the heat-treatment-free aluminum alloy material according to claim 9, wherein acquiring the heat-treatment-free aluminum alloy material by subjecting the raw materials for preparation to the melting treatment, the drossing treatment, and the die casting treatment in sequence comprises:
acquiring a first raw material melt by subjecting the first part of raw material for preparation to the melting treatment and dross removal treatment in sequence;
acquiring an aluminum alloy melt by adding components contained in the second part of raw material for preparation into the first raw material melt in a stepwise addition manner and performing the melting treatment; and
acquiring the heat-treatment-free aluminum alloy material by subjecting the aluminum alloy melt to the die casting treatment.

11. Use of a heat-treatment-free aluminum alloy material in preparing an aluminum alloy structural member, wherein the heat-treatment-free aluminum alloy material is as defined in any one of claims 1 to 4, or is prepared by the method for preparing the heat-treatment-free aluminum alloy material as defined in any one of claims 5 to 10.

12. An aluminum alloy structural member, prepared by using a heat-treatment-free aluminum alloy material, wherein the heat-treatment-free aluminum alloy material is as defined in any one of claims 1 to 4, or is prepared by the method for preparing the heat-treatment-free aluminum alloy material as defined in any one of claims 5 to 10.
